Europäisches Patentamt

European Patent Office

Office européen des brevets

(19)

(11) **EP 0 910 035 A1**

(12) # DEMANDE DE BREVET EUROPEEN

(43) Date de publication:
**21.04.1999 Bulletin 1999/16**

(51) Int Cl.⁶: **G06K 9/38**

(21) Numéro de dépôt: **98402547.8**

(22) Date de dépôt: **14.10.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **15.10.1997 FR 9712889**

(71) Demandeurs:
• **Johnson, Jeffrey Horace**
  **Woburn Sands, Bucks MK17 8QH (GB)**
• **Simon, Jean-Claude, André**
  **75007 Paris (FR)**

(72) Inventeurs:
• **Johnson, Jeffrey Horace**
  **Woburn Sands, Bucks MK17 8QH (GB)**
• **Simon, Jean-Claude, André**
  **75007 Paris (FR)**

(74) Mandataire: **Loisel, Bertrand**
  **Cabinet Plasseraud,**
  **84, rue d'Amsterdam**
  **75440 Paris Cédex 09 (FR)**

(54) **Procédé d'extraction automatique d'inscriptions imprimées ou manuscrites sur un fond, dans une image numérique multiniveaux**

(57) Pour extraire automatiquement des inscriptions imprimées ou manuscrites sur un fond, dans une image numérique à N niveaux de gris, on retient les valeurs de pixels différentiels qui, après comparaison à des pixels voisins, vérifient simultanément au moins deux inégalités ; puis, pour chaque groupe d'inégalités, on établit un histogramme des pixels différentiels ; on en déduit une valeur de niveau de gris seuil S, en fonction duquel on répartit les pixels différentiels en deux catégories ; on détermine des précurseurs, ensembles de pixels contigus qui ont été classés précédemment dans une catégorie donnée ; parmi ces précurseurs, on extrait des polygones comprenant un nombre donné de précurseurs connexes ; lorsque le nombre total de précurseurs connexes est insuffisant, on modifie le seuil S et on réitère le procédé à partir de l'étape de répartition des pixels en fonction de ce seuil. Les inscriptions sont obtenues sous la forme des polygones extraits.

FIG.1.

**Description**

La présente invention concerne un procédé d'extraction automatique d'inscriptions imprimées ou manuscrites sur un fond, dans une image numérique multiniveaux. Plus précisément, elle concerne un procédé pour traiter une image numérique à N niveaux de gris, N étant un entier supérieur à 2, qui comporte, d'une part, un fond préalablement imprimé et, d'autre part, des données inscrites sur ce fond par impression ou écriture manuscrite, afin d'extraire ces données en vue d'opérations ultérieures d'analyse et de reconnaissance automatiques.

L'invention s'applique notamment à la saisie automatique de montants de chèques et sera plus particulièrement décrite ici dans cette application.

Néanmoins, plus généralement, l'invention peut être appliquée dans de nombreux domaines qui utilisent l'analyse automatique de documents dont le fond pose problème, comme par exemple dans le domaine de la cartographie.

En matière de saisie automatique de montants de chèques, une opération essentielle consiste à détecter et extraire automatiquement les montants en chiffres et en lettres imprimés ou manuscrits sur les chèques. La difficulté majeure de cette opération provient de ce que le fond préimprimé des chèques est généralement complexe et n'est pas restitué avec les qualités requises par les capteurs d'image couramment utilisés qui fournissent une image binaire des chèques à analyser.

Le problème consistant à éliminer le fond du chèque et extraire les montants en chiffres et en lettres dans une image binaire ne peut donc être résolu de façon satisfaisante par une simple technique classique de binarisation par seuillage, qui attribuerait à la partie "fond" les pixels ayant une valeur de niveau de gris supérieure à un seuil fixe choisi au préalable, et à la partie "montant" les pixels ayant une valeur de niveau de gris inférieure à ce seuil fixe.

L'application de techniques classiques de binarisation par seuillage conduit en effet à de nombreuses erreurs d'interprétation : des chiffres ou des lettres des montants à reconnaître peuvent être filtrés par erreur comme appartenant au fond préimprimé du chèque, et vice versa. L'ambiguïté entre le fond et les inscriptions est d'autant plus grande que sur l'image de gris de certains chèques, il arrive que des pixels du fond soient plus foncés que des pixels correspondant à l'image du montant du chèque.

La présente invention a pour but de pallier les inconvénients précités en proposant un seuillage adaptatif, particulièrement adapté à l'élimination du fond dans les images à traiter, et fondé sur la détection de configurations géométriques bidimensionnelles particulières, susceptibles de correspondre aux inscriptions imprimées ou manuscrites recherchées.

L'invention peut être utilisée aussi bien pour traiter une image entière, telle qu'une image de l'ensemble d'un chèque, que pour traiter une sous-image, un champ particulier de l'image ou, plus généralement, toute portion d'image.

Dans ce but, la présente invention propose un procédé d'extraction automatique d'inscriptions imprimées ou manuscrites sur un fond, dans une image numérique à N niveaux de gris, N étant un entier supérieur à 2, suivant lequel, pour chaque ensemble constitué d'une ligne ou de plusieurs lignes contiguës de pixels de l'image :

(a) on compare la valeur de niveau de gris de chaque pixel aux valeurs respectives d'au moins deux autres pixels appartenant à un voisinage prédéterminé de ce pixel, et on retient les valeurs des pixels qui, après comparaison, vérifient simultanément au moins deux inégalités prédéterminées ;

puis, pour chaque groupe d'inégalités à vérifier simultanément :

(b) on établit un histogramme donnant, pour chaque valeur de niveau de gris comprise entre 0 et N-1, le nombre de pixels retenus à l'issue des comparaisons effectuées à l'étape (a) ;
(c) à partir de l'histogramme, on détermine, parmi les N valeurs de niveau de gris, un seuil S ;
(d) on répartit les pixels retenus en une première catégorie, pour laquelle la valeur est supérieure à S, et une deuxième catégorie, pour laquelle la valeur n'est pas supérieure à S ;
(e) on balaie horizontalement, respectivement verticalement, ledit ensemble constitué d'une ligne ou de plusieurs lignes de l'image et on détermine sur chaque ligne, respectivement chaque colonne, des précurseurs horizontaux, respectivement verticaux, comme étant des ensembles de pixels contigus horizontalement, respectivement verticalement, et qui ont été classés à l'étape (d) dans la deuxième catégorie ;
(f) parmi les précurseurs horizontaux, respectivement verticaux, déterminés précédemment, on extrait des polygones verticaux, comprenant un nombre $y_v$ de précurseurs horizontaux connexes verticalement, et des polygones horizontaux, comprenant un nombre $x_h$ de précurseurs verticaux connexes horizontalement ;
(g) lorsque le nombre total $y_v$ de précurseurs horizontaux connexes verticalement est inférieur à un nombre prédéterminé $p_v$ ou lorsque le nombre total $x_h$ de précurseurs verticaux connexes horizontalement est inférieur à un nombre prédéterminé $p_h$, on réitère les étapes (d) à (f) avec une valeur de seuil S modifiée ;

lesdites inscriptions étant obtenues sous la forme desdits polygones extraits.

Selon un mode particulier de réalisation, à l'étape (c), on peut rechercher un maximum local de l'histogramme, déterminer la tangente à l'histogramme en un point d'inflexion ayant une abscisse inférieure à l'abscisse de ce maximum local, et choisir comme seuil S la valeur de niveau de gris située à l'intersection de ladite tangente avec l'axe des abscisses de l'histogramme.

En variante, à l'étape (c), on peut rechercher deux maxima locaux de l'histogramme et, le cas échéant, choisir comme seuil S la valeur de niveau de gris située au milieu du segment joignant les abscisses de ces deux maxima locaux.

En variante, à l'étape (c),

(c1) on établit pour chaque ligne un histogramme tel que celui défini à l'étape (b) ;

(c2) dans chaque histogramme H(g), où g, $0 \le g < N$, désigne la valeur de niveau de gris, on détermine toutes les valeurs de niveau de gris $g_0$ pour lesquelles $H(g_0) = 0$ et $H(g_0+1) > 0$ ;

(c3) pour chaque valeur de niveau de gris, on additionne le nombre de valeurs $g_0$ satisfaisant aux conditions définies à l'étape (c2) relevées dans tous les histogrammes ;

(c4) on choisit pour seuil S la valeur de niveau de gris pour laquelle le total obtenu à l'issue de l'étape (c3) est maximal, en excluant le choix S = O.

Une variante à l'étape (c2) consiste à déterminer, dans chaque histogramme H(g), les valeurs $g_0$ pour lesquelles $H(g_0-1) \ge H(g_0)$ et $H(g_0) < H(g_0+1)$.

L'ensemble de lignes contiguës précité peut comprendre 8 lignes contiguës de l'image, en particulier si l'image à traiter a été comprimée conformément à la norme JPEG.

Les inscriptions consistant en des traits verticaux sont extraites sous la forme de polygones verticaux, et les inscriptions consistant en des traits horizontaux sont extraites sous la forme de polygones horizontaux.

Dans le même but qu'indiqué plus haut, la présente invention propose également une variante du procédé précédent, sous la forme d'un procédé d'extraction automatique d'inscriptions imprimées ou manuscrites sur un fond, dans une image numérique à N niveaux de gris, N étant un entier supérieur à 2, suivant lequel, pour chaque ensemble constitué d'une ligne ou de plusieurs lignes contiguës de pixels de l'image :

(a1) on compare la valeur de niveau de gris de chaque pixel aux valeurs respectives d'au moins deux autres pixels, et on retient les valeurs des pixels qui, après comparaison, vérifient simultanément au moins deux inégalités prédéterminées ;

(b1) on balaie horizontalement, respectivement verticalement, ledit ensemble constitué d'une ligne ou de plusieurs lignes de l'image et on détermine sur chaque ligne, respectivement chaque colonne, des précurseurs de gradient horizontaux, respectivement verticaux, comme étant des ensembles de pixels contigus horizontalement, respectivement verticalement, et qui ont été retenus à l'issue des comparaisons effectuées à l'étape (a1) ;

(c1) pour chaque précurseur de gradient déterminé à l'issue de l'étape (b1), on calcule la différence entre la valeur de niveau de gris maximale et la valeur de niveau de gris minimale des pixels dudit précurseur de gradient ; et on associe la valeur de ladite différence audit précurseur de gradient ;

(d1) on établit un histogramme donnant, pour chacun des NxN couples définis par (i) une valeur de niveau de gris comprise entre 0 et N-1, et (ii) une valeur, comprise entre O et N-1, desdites différences calculées à l'étape (c1), le nombre de pixels appartenant à un précurseur de gradient et dont la valeur de niveau de gris et la valeur de la différence associée audit précurseur de gradient sont respectivement égales à la valeur de niveau de gris dans ledit couple et à la valeur de la différence dans ledit couple ;

(e1) à partir de l'histogramme, on détermine, parmi les N valeurs desdites différences, un seuil dg0 ;

(f1) on extrait lesdites inscriptions sous la forme des pixels appartenant à des précurseurs de gradient dont la valeur de la différence associée est supérieure audit seuil dgO.

Cette variante du procédé permet d'améliorer la probabilité de discrimination correcte entre le fond et les inscriptions.

Dans un mode particulier de réalisation, à l'étape (a), respectivement (a1), du procédé ci-dessus, on teste si les couples suivants d'inégalités sont vérifiés :

(i)   $g(x,y) \otimes g(x-1,y)$ et $g(x+1,y) \otimes g(x,y)$

(ii)   $g(x,y) \otimes g(x,y-1)$ et $g(x,y+1) \otimes g(x,y)$

(iii)   $g(x,y) \otimes g(x-1,y-1)$ et $g(x+1,y+1) \otimes g(x,y)$

(iv)   $g(x,y) \otimes g(x+1,y-1)$ et $g(x-1,y+1) \otimes g(x,y)$

(v)   $g(x,y) \otimes g(x-2,y)$ et $g(x+2,y) \otimes g(x,y)$

(vi)   $g(x,y) \otimes g(x,y-2)$ et $g(x,y+2) \otimes g(x,y)$

(vii)   $g(x,y) \otimes g(x-2,y-2)$ et $g(x+2,y+2) \otimes g(x,y)$

(viii)     $g(x,y) \otimes g(x+2,y-2)$ et $g(x-2,y+2) \otimes g(x,y)$

où $g(x,y)$ désigne la valeur de niveau de gris du pixel situé au croisement de la $y^{\text{ème}}$ ligne et de la $x^{\text{ème}}$ colonne de l'image, et où le signe $\otimes$ peut être l'un quelconque des signes $\leq, <, \geq, >$.

D'autres buts et aspects de la présente invention apparaîtront à la lecture de la description détaillée qui suit de modes particuliers de réalisation, donnés à titre d'exemples non limitatifs. La description se réfère aux dessins qui l'accompagnent, dans lesquels :

-   la figure 1 est un organigramme du procédé conforme à la présente invention, dans un mode particulier de réalisation ;
-   les figures 2A à 2H illustrent les différents types de voisinages considérés à l'étape (a) du procédé conforme à la présente invention, dans un mode particulier de réalisation ;
-   la figure 3 représente un exemple d'histogramme susceptible d'être obtenu à l'issue de l'étape (b) du procédé conforme à la présente invention, dans un mode particulier de réalisation ;
-   la figure 4 représente de façon schématique quatre polygones de forme arbitraire, susceptibles d'être obtenus à l'issue de l'étape (e) du procédé conforme à la présente invention, dans un mode particulier de réalisation ;
-   la figure 5 est un organigramme du procédé conforme à la présente invention, dans une variante de réalisation ; et
-   la figure 6 représente une projection simplifiée, dans le plan de coordonnées (g,dg) défini plus loin, d'un histogramme comportant un seuil dg0, susceptible d'être obtenu à l'issue de l'étape (e1) du procédé conforme à la présente invention, dans la variante de réalisation de la figure 5.

Dans ce qui suit, on considère une image numérique à N niveaux de gris, N étant un entier supérieur à 2, dite image numérique "multiniveaux". A titre indicatif, on peut avoir N = 256. Cette image peut avoir été obtenue à l'aide d'un capteur classique, du type caméra de télévision, barrette de CCD ou réseau de diodes.

Dans l'application de la présente invention à la saisie automatique de montants de chèques, il s'agit de l'image d'un chèque, comportant un fond préimprimé et des inscriptions imprimées ou manuscrites sur ce fond, qui indiquent généralement le montant du chèque en chiffres et en lettres, le bénéficiaire, le lieu et la date du chèque, ainsi que la signature de la personne ayant établi le chèque.

A titre indicatif, la taille moyenne d'un chèque étant de 80 x 175 mm², et l'image étant par exemple échantillonnée à environ 240 d.p.i. (c'est-à-dire 240 points par pouce, en anglais "dots per inch"), ce qui équivaut approximativement à 8 à 10 pixels par mm, on dispose d'une image ayant une taille de l'ordre de grandeur de 800 x 1750 pixels.

On cherche à extraire de façon automatique ces inscriptions imprimées ou manuscrites, et plus particulièrement à extraire des traits verticaux, horizontaux et obliques qui les constituent.

Pour cela, on considère un ensemble de L lignes contiguës de pixels de l'image, L étant un entier supérieur ou égal à 1 et on effectue l'ensemble des traitements sur cet ensemble de L lignes.

A titre d'exemple non limitatif, si l'image est codée suivant la norme JPEG, on considère des ensembles de L = 8 lignes.

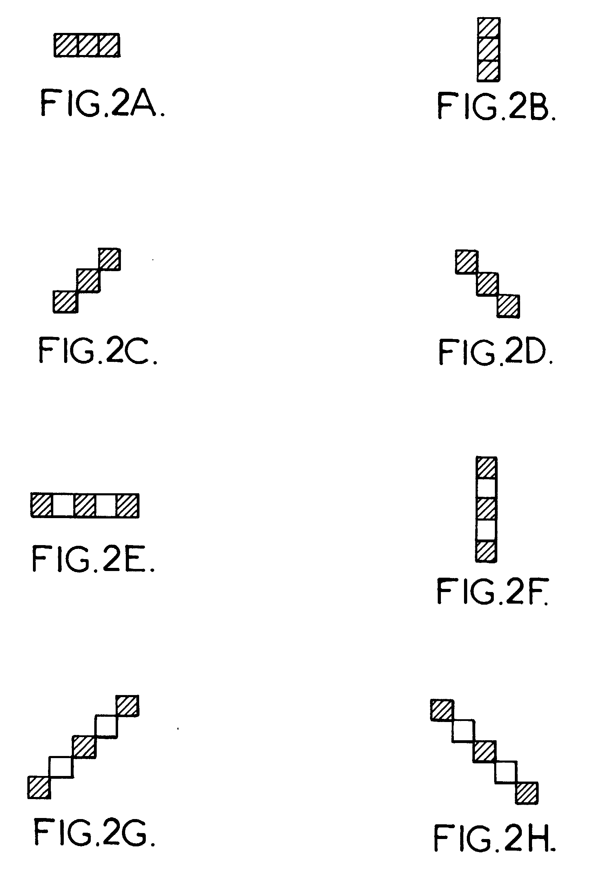

Au cours d'une première étape, on définit différents voisinages d'un pixel central donné. Dans un mode particulier de réalisation, on définit huit voisinages comprenant chacun deux pixels en plus du pixel central. Ces voisinages sont illustrés par les figures 2A à 2H, où chaque pixel est représenté par un carré.

En variante, on peut définir des voisinages comprenant plus de deux pixels en plus du pixel central.

On note $g(x,y)$ la valeur de niveau de gris du pixel situé au croisement de la $y^{\text{ème}}$ ligne et de la $x^{\text{éme}}$ colonne de l'image. A titre d'exemple non limitatif, on peut choisir une échelle de niveaux de gris telle que plus un pixel est clair, plus sa valeur g est grande.

Pour chaque pixel de l'ensemble de L lignes de l'image à traiter, on considère un voisinage déterminé et on compare la valeur de niveau de gris du pixel central aux valeurs de niveau de gris de ses deux voisins.

Le voisinage représenté sur la figure 2A comprend un pixel central et ses voisins directs de gauche et de droite. On compare $g(x,y)$, d'une part, à $g(x-1,y)$, valeur de niveau de gris du pixel voisin de gauche, et d'autre part, à $g(x+1,y)$, valeur de niveau de gris du pixel voisin de droite. On teste si les deux inégalités suivantes sont vérifiées simultanément :

$$g(x,y) \otimes g(x-1,y) \text{ et } g(x+1,y) \otimes g(x,y)$$

où le signe $\otimes$ est un signe d'inégalité choisi : $\leq, <, \geq$ ou $>$. On choisit par exemple le signe $<$, ce qui revient à tester si les trois pixels considérés ont des valeurs de niveau de gris décroissantes de gauche à droite, c'est-à-dire sont de plus en plus foncés de gauche à droite.

Les voisinages représentés sur les figures 2B à 2H donnent lieu à la vérification de couples d'inégalités analogues.

Si on considère un voisinage tel que représenté sur la figure 2B, on teste si les deux inégalités suivantes sont vérifiées simultanément :

$$g(x,y) \otimes g(x,y-1) \text{ et } g(x,y) \otimes g(x,y+1)$$

Si on considère un voisinage tel que représenté sur la figure 2C, on teste si les deux inégalités suivantes sont vérifiées simultanément :

$$g(x,y) \otimes g(x\text{-}1,y\text{-}1) \text{ et } g(x,y) \otimes g(x\text{+}1,y\text{+}1)$$

Si on considère un voisinage tel que représenté sur la figure 2D, on teste si les deux inégalités suivantes sont vérifiées simultanément :

$$g(x,y) \otimes g(x\text{+}1,y\text{-}1) \text{ et } g(x,y) \otimes g(x\text{-}1,y\text{+}1)$$

Si on considère un voisinage tel que représenté sur la figure 2E, on teste si les deux inégalités suivantes sont vérifiées simultanément :

$$g(x,y) \otimes g(x\text{-}2,y) \text{ et } g(x,y) \otimes g(x\text{+}2,y)$$

Si on considère un voisinage tel que représenté sur la figure 2F, on teste si les deux inégalités suivantes sont vérifiées simultanément :

$$g(x,y) \otimes g(x,y\text{-}2) \text{ et } g(x,y) \otimes g(x,y\text{+}2)$$

Si on considère un voisinage tel que représenté sur la figure 2G, on teste si les deux inégalités suivantes sont vérifiées simultanément :

$$g(x,y) \otimes g(x\text{-}2,y\text{-}2) \text{ et } g(x,y) \otimes g(x\text{+}2,y\text{+}2)$$

Si on considère un voisinage tel que représenté sur la figure 2H, on teste si les deux inégalités suivantes sont vérifiées simultanément :

$$g(x,y) \otimes g(x\text{+}2,y\text{-}2) \text{ et } g(x,y) \otimes g(x\text{-}2,y\text{+}2)$$

On retient les pixels qui vérifient un couple d'inégalités parmi les précédents. Ces pixels sont dits "pixels différentiels".

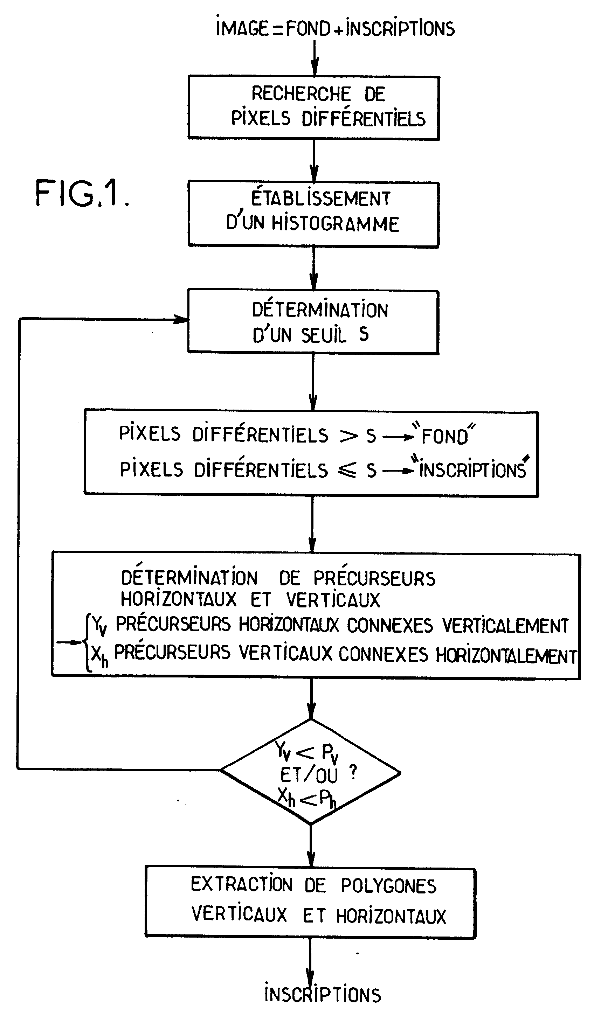

Dans le mode particulier de réalisation de la figure 1, pour un ensemble de pixels différentiels vérifiant un couple d'inégalités donné, on établit un histogramme portant, en abscisse, les valeurs g de niveau de gris, et en ordonnée, le nombre correspondant de pixels différentiels.

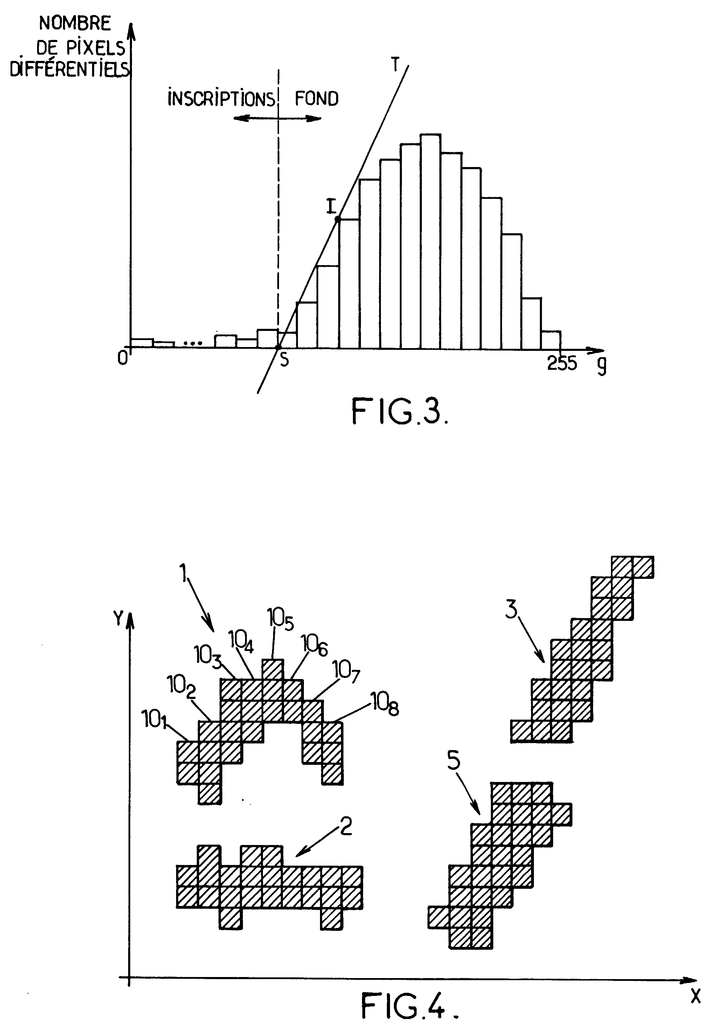

On observe qu'un tel histogramme comporte un ou plusieurs maxima locaux. La figure 3 représente, à titre d'exemple non limitatif, un histogramme de forme arbitraire, établi pour N = 256 niveaux de gris et comportant un maximum. Dans la suite, cet histogramme est dit monodimensionnel.

L'étape suivante du procédé selon l'invention, dans le mode particulier de réalisation de la figure 1, consiste à déterminer, à partir de l'histogramme, une valeur de niveau de gris seuil S, en deçà de laquelle les pixels différentiels seront considérés comme susceptibles d'appartenir à des inscriptions et au-delà de laquelle les pixels différentiels seront considérés comme susceptibles d'appartenir au fond de l'image.

Ce seuil S de décision peut être déterminé de plusieurs façons.

Dans le mode particulier de réalisation illustré par la figure 3, on détermine la tangente T à l'histogramme en un point d'inflexion I de l'histogramme situé à gauche du maximum, c'est-à-dire ayant une abscisse inférieure à l'abscisse du maximum. La tangente T coupe l'axe des abscisses en un point S, dont la valeur de niveau de gris est choisie comme seuil.

En variante, on peut rechercher deux maxima locaux de l'histogramme. S'ils existent, on peut choisir pour valeur seuil S le milieu du segment joignant les abscisses des deux maxima.

Une autre variante pour déterminer le seuil S consiste, à l'étape (c), à établir tout d'abord un histogramme des pixels différentiels de chaque ligne, noté H (g), où g désigne la valeur de niveau de gris, $0 \leq g < N$. Puis on détermine, dans chaque histogramme, un type particulier de configuration : une valeur de niveau de gris $g_0$ pour laquelle $H(g_0) = 0$ et $H(g_0+1) > 0$. Il peut y avoir plusieurs valeurs $g_0$ pour chaque ligne.

Une variante consiste à déterminer les valeurs $g_0$ pour lesquelles $H(g_0\text{-}1) \geq H(g_0)$ et $H(g_0) < H(g_0+1)$. Cette variante généralise le cas précédent.

On additionne ensuite, pour chaque valeur de niveau de gris, le nombre de valeurs $g_0$ relevées dans tous les histogrammes. Pour cela, on ne tient pas compte des valeurs de niveau de gris extrêmes, à titre d'exemple, 0, 1, 2 et 13, 14, 15 pour 16 valeurs de niveau de gris, car ces valeurs risquent de produire des points aberrants.

On choisit pour seuil S la valeur de niveau de gris pour laquelle le nombre de valeurs $g_0$ est le plus grand.

L'étape suivante du procédé consiste à rechercher, parmi les pixels différentiels, des ensembles de pixels contigus, horizontalement et verticalement.

Par balayage horizontal, on détermine ainsi des ensembles comprenant au moins 2 pixels différentiels contigus horizontalement, appelés "précurseurs horizontaux", et par balayage vertical, on détermine des ensembles comprenant au moins 2 pixels différentiels contigus verticalement, appelés "précurseurs verticaux".

Ensuite, on recherche des ensembles de précurseurs verticaux connexes horizontalement. Ces configurations, dites "polygones horizontaux", sont susceptibles de correspondre à des traits horizontaux constituant les inscriptions à extraire.

On recherche de même des ensembles de précurseurs horizontaux connexes verticalement, dits "polygones verticaux".

La figure 4 donne l'allure d'un ensemble 1 de précurseurs verticaux recouvrant une courbe. L'ensemble 1 est formé de 8 précurseurs verticaux $10_1$, ..., $10_8$.

On voit sur la figure 4 que les pixels de deux précurseurs adjacents du polygone 1 sont situés dans des colonnes adjacentes de l'image. Cela illustre la connexité des précurseurs, condition nécessaire d'appartenance à un polygone.

La figure 4 donne également l'allure d'un polygone horizontal 2 recouvrant un trait horizontal. On voit que les précurseurs formant un polygone ne sont pas nécessairement de taille égale.

La figure 4 donne en outre l'allure de deux polygones verticaux 3 et 5, formés respectivement de 9 précurseurs horizontaux et 8 précurseurs horizontaux.

Il peut arriver que le nombre $y_v$ de précurseurs horizontaux trouvés formant un polygone soit insuffisant pour extraire un trait vertical sur toute sa hauteur. On obtient dans ce cas plusieurs polygones disjoints, tels que les polygones 3 et 5 de la figure 4.

La même situation peut se produire pour le nombre $x_h$ de précurseurs verticaux.

Cela signifie que le seuil S de décision choisi précédemment n'est pas judicieux.

On détermine un nombre $p_v$ de précurseurs horizontaux connexes verticalement à atteindre pour former un polygone vertical estimé de hauteur suffisante. Le choix de $p_v$ est fonction de la largeur moyenne attendue des polygones verticaux, ainsi que du nombre de lignes toléré entre deux polygones verticaux disjoints susceptibles de couvrir un même trait vertical.

De même, on détermine un nombre $p_h$ de précurseurs verticaux connexes horizontalement à atteindre pour former un polygone horizontal estimé de longueur suffisante. De façon analogue, le choix de $p_h$ est fonction de la hauteur moyenne attendue des polygones horizontaux, ainsi que du nombre de colonnes toléré entre deux polygones horizontaux disjoints susceptibles de couvrir un même trait horizontal.

Si $y_v < p_v$ et/ou si $x_h < p_h$, on modifie la valeur du seuil S, par exemple en l'augmentant d'une unité, et on réitère les étapes de classification des pixels différentiels, de détermination des précurseurs et de recherche des polygones.

Par adaptation du seuil S, on obtient ainsi des polygones verticaux couvrant des traits verticaux sur toute leur hauteur et des polygones horizontaux couvrant des traits horizontaux sur toute leur longueur.

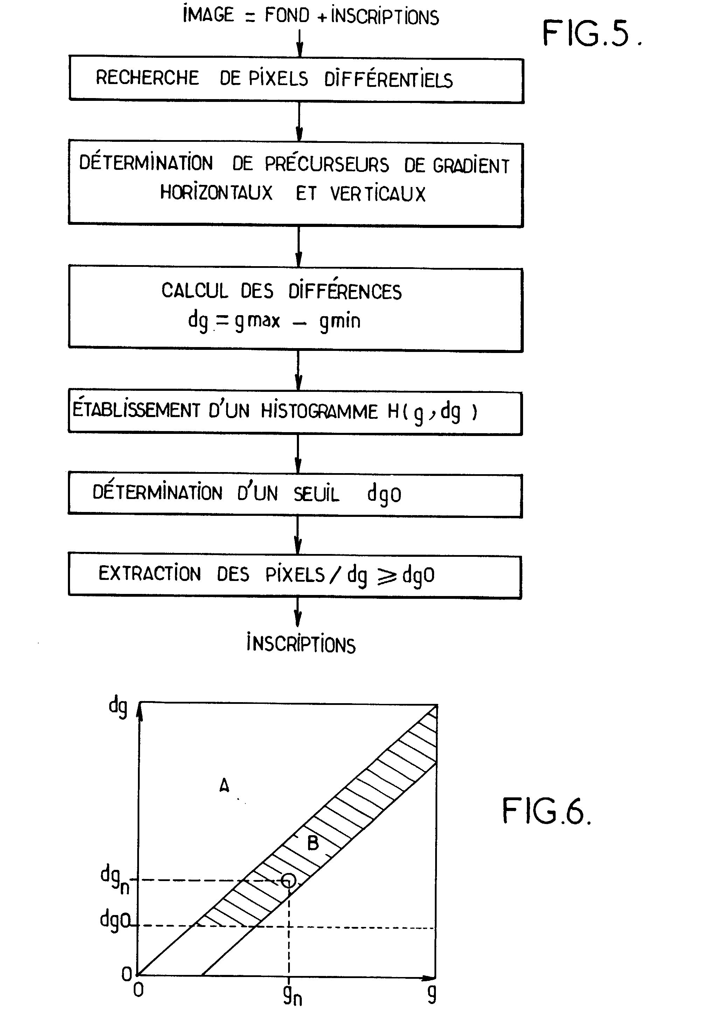

On décrit ci-après, à l'aide des figures 5 et 6, une variante de réalisation du procédé de l'invention, qui permet une meilleure discrimination entre fond et inscriptions. Cette variante apporte donc une amélioration par rapport au mode de réalisation décrit précédemment, notamment dans le cas où l'histogramme monodimensionnel défini plus haut présente plus de deux maxima locaux, ou encore une ou plusieurs régions ambiguës, c'est-à-dire qui sont susceptibles de correspondre, soit à des traits recherchés, soit à du fond à éliminer.

Dans ce cas, la décision peut se faire à l'aide d'un histogramme bidimensionnel, c'est-à-dire établi à partir de deux variables de base, dont l'une est le niveau de gris g déjà utilisé pour établir l'histogramme monodimensionnel du mode de réalisation précédent, et l'autre est une différence, notée dg, déterminée de la façon décrite ci-dessous.

Comme le montre la figure 5, la première étape du procédé, dans cette variante de réalisation, est identique à la première étape dans le mode particulier de réalisation décrit précédemment. Cette étape de recherche de pixels différentiels ne sera donc pas décrite à nouveau ici.

L'étape suivante consiste à déterminer des ensembles particuliers de pixels, appelés "précurseurs de gradient" horizontaux et verticaux.

La définition des "précurseurs" donnée en relation avec le mode particulier de réalisation précédent, peut être généralisée comme suit. Dans un balayage horizontal, respectivement vertical de l'image ou de la région d'image à traiter, un "précurseur" est un ensemble de pixels contigus horizontalement, respectivement verticalement, ayant la même propriété P. Par exemple, la propriété P peut être $g(x,y) \geq T$, où T est un seuil.

On définit à présent un "précurseur de gradient" comme un précurseur pour lequel la propriété P, vérifiée par tous les pixels de ce précurseur, est l'un des couples d'inégalités testés dans le cadre du mode particulier de réalisation précédent. En particulier, la propriété P de "gradient négatif" horizontal peut être définie, à titre d'exemple non limitatif, par la propriété $g(x,y) \geq g(x+1,y)$, ou, pour pallier un bruit éventuel au niveau du pixel de niveau de gris $g(x+1,y)$, par la propriété $g(x,y) \geq g(x+2,y)$, vérifiée par tous les pixels de coordonnées $(x,y)$ du précurseur de gradient, à l'exception du pixel situé à l'extrémité de droite du précurseur de gradient.

On peut définir de façon analogue une propriété de "gradient positif" en changeant le signe des inégalités.

L'étape suivante consiste, comme le montre la figure 5, à calculer, pour chaque précurseur de gradient déterminé précédemment, la différence, notée dg, entre la valeur de niveau de gris maximale gmax et la valeur de niveau de gris minimale gmin des pixels de ce précurseur de gradient, soit dg = gmax - gmin. A chaque précurseur de gradient est associée une valeur de dg.

Que la propriété des précurseurs de gradient considérés soit un gradient positif ou négatif, on a toujours $dg \geq 0$. Par ailleurs, si le niveau de gris g peut prendre N valeurs, la différence dg peut également prendre N valeurs.

On établit ensuite un histogramme bidimensionnel H(g,dg), sur la base des deux variables g et dg. D'après ce qui précède, on voit que le plan de coordonnées (g,dg) de cet histogramme comporte NxN points. A chaque point $(g_n,dg_n)$ de ce plan, on associe tous les pixels appartenant à un précurseur de gradient et dont la valeur de niveau de gris $g(x,y)$ et la valeur de la différence dg associée à ce précurseur de gradient sont respectivement égales à $g_n$ et à $dg_n$, soit $g(x,y) = g_n$ et $dg = dg_n$.

La figure 6 illustre la projection simplifiée de H (g,dg) dans le plan (g,dg). Par souci de clarté, on n'y a pas représenté les pixels associés à chaque point ($g_n$, $dg_n$). Les pixels associés à un point ($g_n$, $dg_n$) de l'histogramme ont seulement été symbolisés par un cercle situé à l'intersection des droites parallèles aux axes et respectivement issues de l'abscisse $g_n$ et de l'ordonnée $dg_n$.

La région A située au-dessus de la diagonale principale du plan (g,dg) est vide ; la région où se trouvent les pixels correspondant à des traits est la région complémentaire de A.

Comme le montre la figure 5, l'étape suivante consiste à déterminer, à partir de l'histogramme H(g, dg), un seuil de décision dg0 parmi les N valeurs des différences dg. Le seuil dg0 est défini de façon que les pixels associés à des points ($g_n$,$dg_n$) de l'histogramme tels que dg < dg0, c'est-à-dire des points situés en dessous du seuil dg0 dans le plan (g,dg), sont considérés comme appartenant au fond, et les pixels associés à des points de l'histogramme situés au-dessus du seuil dg0 sont considérés comme appartenant aux traits ou inscriptions recherchés.

Pour déterminer le seuil dg0, on peut utiliser des techniques similaires à celles utilisées pour déterminer le seuil S dans le mode de réalisation précédent.

Dans la plupart des cas, les pixels correspondant aux traits recherchés se trouvent dans une région B représentée en hachures sur la figure 6. La région B est voisine et en dessous de la diagonale principale du plan (g,dg).

Une fois les inscriptions extraites conformément au procédé de l'invention, les pixels extraits peuvent faire l'objet d'un traitement de reconnaissance de formes connu, par exemple en vue de saisir automatiquement le montant porté sur le chèque traité, dans l'exemple d'application à la reconnaissance automatique de montant de chèque.

L'image traitée peut également être recomprimée.

## Revendications

1.     Procédé d'extraction automatique d'inscriptions imprimées ou manuscrites sur un fond, dans une image numérique à N niveaux de gris, N étant un entier supérieur à 2, suivant lequel, pour chaque ensemble constitué d'une ligne ou de plusieurs lignes contiguës de pixels de l'image :

(a) on compare la valeur de niveau de gris de chaque pixel aux valeurs respectives d'au moins deux autres pixels appartenant à un voisinage prédéterminé de ce pixel, et on retient les valeurs des pixels qui, après comparaison, vérifient simultanément au moins deux inégalités prédéterminées ;

puis, pour chaque groupe d'inégalités à vérifier simultanément :

(b) on établit un histogramme donnant, pour chaque valeur de niveau de gris comprise entre 0 et N-1, le nombre de pixels retenus à l'issue des comparaisons effectuées à l'étape (a) ;
(c) à partir de l'histogramme, on détermine, parmi les N valeurs de niveau de gris, un seuil S ;
(d) on répartit les pixels retenus en une première catégorie, pour laquelle la valeur est supérieure à S, et une deuxième catégorie, pour laquelle la valeur n'est pas supérieure à S ;
(e) on balaie horizontalement, respectivement verticalement, ledit ensemble constitué d'une ligne ou de plusieurs lignes de l'image et on détermine sur chaque ligne, respectivement chaque colonne, des précurseurs horizontaux, respectivement verticaux, comme étant des ensembles de pixels contigus horizontalement, respectivement verticalement, et qui ont été classés à l'étape (d) dans la deuxième catégorie ;
(f) parmi les précurseurs horizontaux, respectivement verticaux, déterminés précédemment, on extrait des polygones verticaux, comprenant un nombre $y_v$ de précurseurs horizontaux connexes verticalement, et des polygones horizontaux, comprenant un nombre $x_h$ de précurseurs verticaux connexes horizontalement ;
(g) lorsque le nombre total $y_v$ de précurseurs horizontaux connexes verticalement est inférieur à un nombre prédéterminé $p_v$ ou lorsque le nombre total $x_h$ de précurseurs verticaux connexes horizontalement est inférieur à un nombre prédéterminé $p_h$, on réitère les étapes (d) à (f) avec une valeur de seuil S modifiée ;

lesdites inscriptions étant obtenues sous la forme desdits polygones extraits.

2.     Procédé selon la revendication 1, suivant lequel, à l'étape (c), on recherche un maximum local de l'histogramme, on détermine la tangente à l'histogramme en un point d'inflexion ayant une abscisse inférieure à l'abscisse de ce maximum local, et on choisit comme seuil S la valeur de niveau de gris située à l'intersection de ladite tangente avec l'axe des abscisses de l'histogramme.

3.     Procédé selon la revendication 1, suivant lequel, à l'étape (c), on recherche deux maxima locaux de l'histogramme et, le cas échéant, on choisit comme seuil S la valeur de niveau de gris située au milieu du segment joignant les abscisses de ces deux maxima locaux.

**4.** Procédé selon la revendication 1, suivant lequel, à l'étape (c),

(c1) on établit pour chaque ligne un histogramme tel que celui défini à l'étape (b) ;

(c2) dans chaque histogramme H(g), où g, $0 \leq g < N$, désigne la valeur de niveau de gris, on détermine toutes les valeurs de niveau de gris $g_0$ pour lesquelles $H(g_0) = 0$ et $H(g_0+1) > 0$ ;

(c3) pour chaque valeur de niveau de gris, on additionne le nombre de valeurs $g_0$ satisfaisant aux conditions définies à l'étape (c2) relevées dans tous les histogrammes ;

(c4) on choisit pour seuil S la valeur de niveau de gris pour laquelle le total obtenu à l'issue de l'étape (c3) est maximal.

**5.** Procédé selon la revendication 1, suivant lequel, à l'étape (c),

(c1) on établit pour chaque ligne un histogramme tel que celui défini à l'étape (b) ;

(c2) dans chaque histogramme H(g), où g, $0 \leq g < N$, désigne la valeur de niveau de gris, on détermine toutes les valeurs de niveau de gris $g_0$ pour lesquelles $H(g_0-1) \geq H(g_0)$ et $H(g_0) < H(g_0+1)$ ;

(c3) pour chaque valeur de niveau de gris, on additionne le nombre de valeurs $g_0$ satisfaisant aux conditions définies à l'étape (c2) relevées dans tous les histogrammes ;

(c4) on choisit pour seuil S la valeur de niveau de gris pour laquelle le total obtenu à l'issue de l'étape (c3) est maximal.

**6.** Procédé selon l'une quelconque des revendications précédentes, suivant lequel on effectue les étapes (a) à (f) pour chaque ensemble de 8 lignes contiguës de l'image.

**7.** Procédé selon l'une quelconque des revendications précédentes, suivant lequel on extrait des inscriptions consistant en des traits verticaux, respectivement horizontaux, sous la forme de polygones verticaux, respectivement horizontaux.

**8.** Procédé d'extraction automatique d'inscriptions imprimées ou manuscrites sur un fond, dans une image numérique à N niveaux de gris, N étant un entier supérieur à 2, suivant lequel, pour chaque ensemble constitué d'une ligne ou de plusieurs lignes contiguës de pixels de l'image :

(a1) on compare la valeur de niveau de gris de chaque pixel aux valeurs respectives d'au moins deux autres pixels, et on retient les valeurs des pixels qui, après comparaison, vérifient simultanément au moins deux inégalités prédéterminées ;

(b1) on balaie horizontalement, respectivement verticalement, ledit ensemble constitué d'une ligne ou de plusieurs lignes de l'image et on détermine sur chaque ligne, respectivement chaque colonne, des précurseurs de gradient horizontaux, respectivement verticaux, comme étant des ensembles de pixels contigus horizontalement, respectivement verticalement, et qui ont été retenus à l'issue des comparaisons effectuées à l'étape (a1) ;

(c1) pour chaque précurseur de gradient déterminé à l'issue de l'étape (b1), on calcule la différence entre la valeur de niveau de gris maximale et la valeur de niveau de gris minimale des pixels dudit précurseur de gradient ; et on associe la valeur de ladite différence audit précurseur de gradient ;

(d1) on établit un histogramme donnant, pour chacun des NxN couples définis par (i) une valeur de niveau de gris comprise entre 0 et N-1, et (ii) une valeur, comprise entre 0 et N-1, desdites différences calculées à l'étape (c1), le nombre de pixels appartenant à un précurseur de gradient et dont la valeur de niveau de gris et la valeur de la différence associée audit précurseur de gradient sont respectivement égales à la valeur de niveau de gris dans ledit couple et à la valeur de la différence dans ledit couple ;

(e1) à partir de l'histogramme, on détermine, parmi les N valeurs desdites différences, un seuil dg0 ;

(f1) on extrait lesdites inscriptions sous la forme des pixels appartenant à des précurseurs de gradient dont la valeur de la différence associée est supérieure audit seuil dg0.

**9.** Procédé selon la revendication 1 ou 8, suivant lequel, à l'étape (a), respectivement (a1), on teste si les couples suivants d'inégalités sont vérifiés :

(i)      $g(x,y) \otimes g(x-1,y)$ et $g(x+1,y) \otimes g(x,y)$

(ii)      $g(x,y) \otimes g(x,y-1)$ et $g(x,y+1) \otimes g(x,y)$

(iii)      $g(x,y) \otimes g(x-1,y-1)$ et $g(x+1,y+1) \otimes g(x,y)$

(iv)      $g(x,y) \otimes g(x+1,y-1)$ et $g(x-1,y+1) \otimes g(x,y)$

(v)  $g(x,y) \otimes g(x-2,y)$ et $g(x+2,y) \otimes g(x,y)$

(vi)  $g(x,y) \otimes g(x,y-2)$ et $g(x,y+2) \otimes g(x,y)$

(vii)  $g(x,y) \otimes g(x-2,y-2)$ et $g(x+2,y+2) \otimes g(x,y)$

(viii)  $g(x,y) \otimes g(x+2,y-2)$ et $g(x-2,y+2) \otimes g(x,y)$

où $g(x,y)$ désigne la valeur de niveau de gris du pixel situé au croisement de la $y^{ème}$ ligne et de la $x^{ème}$ colonne de l'image, et où le signe $\otimes$ peut être l'un quelconque des signes $\leq, <, \geq, >$.

IMAGE = FOND + INSCRIPTIONS

FIG.1.

RECHERCHE DE
PIXELS DIFFÉRENTIELS

ÉTABLISSEMENT
D'UN HISTOGRAMME

DÉTERMINATION
D'UN SEUIL S

PIXELS DIFFÉRENTIELS $>$ S $\longrightarrow$ "FOND"

PIXELS DIFFÉRENTIELS $\leqslant$ S $\longrightarrow$ "INSCRIPTIONS"

DÉTERMINATION DE PRÉCURSEURS
HORIZONTAUX ET VERTICAUX

$Y_v$ PRÉCURSEURS HORIZONTAUX CONNEXES VERTICALEMENT

$X_h$ PRÉCURSEURS VERTICAUX CONNEXES HORIZONTALEMENT

$Y_v < P_v$
ET/OU ?
$X_h < P_h$

EXTRACTION DE POLYGONES
VERTICAUX ET HORIZONTAUX

INSCRIPTIONS

FIG.2A.

FIG.2B.

FIG.2C.

FIG.2D.

FIG.2E.

FIG.2F.

FIG.2G.

FIG.2H.

FIG.3.

FIG.4.

IMAGE = FOND + INSCRIPTIONS

## FIG.5.

RECHERCHE DE PIXELS DIFFÉRENTIELS

DÉTERMINATION DE PRÉCURSEURS DE GRADIENT HORIZONTAUX ET VERTICAUX

CALCUL DES DIFFÉRENCES
$dg = gmax - gmin$

ÉTABLISSEMENT D'UN HISTOGRAMME $H(g, dg)$

DÉTERMINATION D'UN SEUIL $dg0$

EXTRACTION DES PIXELS / $dg \geqslant dg0$

INSCRIPTIONS

## FIG.6.

**EP 0 910 035 A1**

Office européen
des brevets

**RAPPORT DE RECHERCHE EUROPEENNE**

Numéro de la demande

EP 98 40 2547

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WO 87 03118 A (NCR CO) 21 mai 1987<br>* page 7, alinéa 2; revendication 1 *<br>--- | 1,8 | G06K9/38 |
| A | FR 2 517 092 A (PHILIPS NV) 27 mai 1983<br>* page 17, ligne 36 - page 19, ligne 1 *<br>--- | 1,8 | |
| A | US 4 903 316 A (HONGO YASUO  ET AL)<br>20 février 1990<br>* abrégé *<br>--- | 1,8 | |
| A | WO 96 24114 A (UNITED PARCEL SERVICE INC)<br>8 août 1996<br>* abrégé; figures 2-5 *<br>----- | 1,8 | |
| | | | **DOMAINES TECHNIQUES RECHERCHES (Int.Cl.6)**<br><br>G06K |

Le présent rapport a été établi pour toutes les revendications

| Lieu de la recherche | Date d'achèvement de la recherche | Examinateur |
|---|---|---|
| LA HAYE | 18 janvier 1999 | Sonius, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14

**ANNEXE AU RAPPORT DE RECHERCHE EUROPEENNE
RELATIF A LA DEMANDE DE BREVET EUROPEEN NO.**     EP 98 40 2547

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

18-01-1999

| Document brevet cité au rapport de recherche | | Date de publication | Membre(s) de la famille de brevet(s) | | Date de publication |
|---|---|---|---|---|---|
| WO 8703118 | A | 21-05-1987 | US | 4742557 A | 03-05-1988 |
| | | | CA | 1262966 A | 14-11-1989 |
| | | | EP | 0245359 A | 19-11-1987 |
| | | | JP | 6093250 B | 16-11-1994 |
| | | | JP | 63501323 T | 19-05-1988 |
| FR 2517092 | A | 27-05-1983 | NL | 8105256 A | 16-06-1983 |
| | | | DE | 3242734 A | 26-05-1983 |
| | | | GB | 2110449 A,B | 15-06-1983 |
| | | | JP | 1731233 C | 29-01-1993 |
| | | | JP | 4013748 B | 10-03-1992 |
| | | | JP | 58092070 A | 01-06-1983 |
| | | | US | 4501016 A | 19-02-1985 |
| US 4903316 | A | 20-02-1990 | JP | 2057091 C | 23-05-1996 |
| | | | JP | 7099533 B | 25-10-1995 |
| | | | JP | 62267887 A | 20-11-1987 |
| | | | JP | 2027476 C | 26-02-1996 |
| | | | JP | 7066416 B | 19-07-1995 |
| | | | JP | 63131286 A | 03-06-1988 |
| WO 9624114 | A | 08-08-1996 | CA | 2211258 A | 08-08-1996 |
| | | | EP | 0807297 A | 19-11-1997 |
| | | | JP | 10506733 T | 30-06-1998 |

EPO FORM P0460

Pour tout renseignement concernant cette annexe : voir Journal Officiel de l'Office européen des brevets, No.12/82